**Europäisches Patentamt**

**European Patent Office**

**Office européen des brevets**

(19)

(11) Veröffentlichungsnummer: **0 128 149 B1**

(12) # EUROPÄISCHE PATENTSCHRIFT

(45) Veröffentlichungstag der Patentschrift:
**05.10.88**

(21) Anmeldenummer: **83902523.6**

(22) Anmeldetag: **29.07.83**

(86) Internationale Anmeldenummer:
**PCT/DE 83/00131**

(87) Internationale Veröffentlichungsnummer:
**WO 84/00606 (16.02.84 Gazette 84/5)**

(51) Int. Cl.⁴: **G 01 F 11/22, B 65 B 3/30, F 15 B 21/00, F 02 M 69/00, F 02 M 45/00, G 05 D 7/00**

(54) **VOLUMETRISCHE STEUERVORRICHTUNG FÜR FLÜSSIGKEITEN.**

(30) Priorität: **29.07.82 DE 3228345**

(43) Veröffentlichungstag der Anmeldung:
**19.12.84 Patentblatt 84/51**

(45) Bekanntmachung des Hinweises auf die Patenterteilung:
**05.10.88 Patentblatt 88/40**

(84) Benannte Vertragsstaaten:
**AT BE CH DE FR GB LI NL SE**

(56) Entgegenhaltungen:
**DE - A - 3 042 428**
**DE - C - 807 722**
**US - A - 2 824 669**
**US - A - 3 227 312**
**US - A - 3 907 173**
**US - A - 3 996 910**

(73) Patentinhaber: **STEIN, Günter, Waihengeyerstrasse 1, D-8882 Lauingen (DE)**

(72) Erfinder: **STEIN, Günter, Waihengeyerstrasse 1, D-8882 Lauingen (DE)**

(74) Vertreter: **Schuster, Gregor, Dipl.-Ing., Patentanwälte Schuster & Thul Wiederholdstrasse 10, D-7000 Stuttgart 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Gegenstand der Erfindung ist eine Steuervorrichtung nach dem Anspruch 1, die sich bei einfacher Konstruktion und genauer Dosierung in Einspritzanlagen einsetzen lässt.

Schwerkraftmässig arbeitende Steuervorrichtungen sind aus der US-A-28 24 669 und der DE-C-807 722 bekannt, und ein in der US-A-39 96 910 dargestelltes Brennstoffeinspritzsystemen weist eine zeitweilige Verbindung zwischen Zugang und Abgang auf.

Vorteile der Erfindung

Der Volumenteiler weist nicht nur eine Trennfunktion sondern vor allem eine Zumessfunktion auf, wobei keine offene Verbindung vom Zugang zum Abgang besteht, so dass der Steuerschieber im Stillstand den Durchgang sperrt. Ein weiterer wesentlicher Vorteil besteht darin, dass durch das Abgeben einer kalibrierten und durch das Volumen der Öffnungen bestimmten beim Weiterdrehen vom Zugang zum Abgang transportierten Menge eine exakte Dosierung des Mediums ermöglicht. Dadurch, dass, solange der Zugang mit der Öffnung verbunden ist, der Abgang keine Verbindung zur gleichen Öffnung aufweist und keine direkte Verbindung zwischen Zugang und Abgang besteht, arbeitet diese Steuervorrichtung weitgehend unabhängig von der Höhe des Zulaufdruckes, so dass sie für kleine, grosse oder insbesondere wechselnde Drücke gleichermassen als Volumensteuerung mit weitgehend druckunabhängiger Zumessqualität geeignet ist. Da kaum Wärme- oder Leckverluste entstehen, ist zudem ein ausserordentlich hoher Wirkungsgrad erzielbar.

Da die Steuervorrichtung unmittelbar in einen Medienstrom oder in eine Abzweigung desselben einsetzbar ist, kann sie auch als Drucksteuerventil oder Druckreduzierventil Anwendung finden. Im einen Fall bestimmt die weiterströmende Menge, die durch die Drehzahl und die axiale Lage des Steuerschiebers bestimmt wird, den Druck, im anderen Fall die abgezweigte Menge. Dies gilt besonders für gasförmige Medien.

Da sich bei flüssigen Medien oder Emulsionen unter dem Medium Gas bzw. Luftpolster bilden, wird der durch die Zentrifugalkraft bewirkte «Auswurf» des Mediums aus der Öffnung gefördert und beschleunigt. Beim Auffüllen der Öffnung presst nämlich die Flüssigkeit die noch in dieser Sacköffnung befindlichen Gase entsprechend dem auf der Zugangsseite herrschenden Flüssigkeitsdruck zusammen.

Bei der Verwendung der Steuereinrichtung für Flüssigkeiten als Medium kann die natürlich vorhandene Adhäsionskraft der Flüsigkeit für eine Erleichterung des Austritts derselben aus der Öffnung genutzt werden. Durch einen «weichen» Übergang zur Abgangsöffnung in der den Drehschieber aufnehmenden Bohrung des Gehäuses kann bereits vor dem vollständigen Aufsteuern der Abgangsöffnung die eingeschlossene Flüssigkeitsmenge in Ausgangsrichtung in Bewegung gesetzt werden.

Erfindungsgemäss können eine grosse Anzahl von Öffnungen vorgesehen sein, die dann in unterschiedlichster Weise auf der Steuerfläche des Steuerschiebers angeordnet sein können. So beispielsweise in nebeneinander liegenden Reihen, wobei die Öffnungen gegeneinander versetzt sein können. Auch ist es möglich, die Öffnungen als unterschiedlich tiefe Sackbohrungen auszubilden, so dass je nach Tiefe des im Einsatz befindlichen Sacklochs sich auch die transportierte Menge ändert. Eine unterschiedliche Wahl der Lochtiefen über die Längsausdehnung des Steuerschiebers verteilt, ergibt entsprechende Steuermengenänderungen bei axialer Verschiebung des Steuerschiebers.

Mengensteuerungen können auch dadurch erfolgen, dass das Gehäuse verdreht oder axial verschoben wird. Dies kann erforderlich sein, wenn der Steuerschieber starr mit einer axial nicht verschiebbaren Achse gekoppelt ist, z.B. beim Einsatz in Einspritzpumpen.

Je nach Gestaltung des Steuerschiebers, beispielsweise ob als Kolbenschieber, Hohlschieber mit drehfestem Kern oder als Flachschieber mit stirnseitiger Steuerung, können die Öffnungen zudem unterschiedlich ausgebildet sein. So können kurze Sackbohrungen oder Mulden als Öffnungen dienen, insbesondere dann, wenn die Steuerung auf einer Fläche des Steuerschiebers erfolgt; es können jedoch auch Durchbrüche sein, wenn die Steuerung doppelseitig möglich ist.

Gemäss einer weiteren Ausgestaltung der Erfindung ist der Steuerschieber oder auch andere Steuerorgane wie der Kern oder ein um den Steuerschieber angeordneter Ringschieber axial verschiebbar, um damit eine zusätzliche Eingriffsmöglichkeit in die Volumensteuerung zu haben. Hierdurch kann die Menge beeinflusst werden, indem eine unterschiedliche Zahl von Öffnungen für die Steuerung verwendet wird, es kann jedoch auch ein Abstellen der Zumessung bewirkt werden, ohne dass deshalb der Steuerschieber nicht mehr weiter rotiert. Das axiale Verstellen dieser Steuerorgane kann hydraulisch erfolgen, beispielsweise durch abgesteuerte Mengen und in Art einer Regelung.

Es ist zwar bekannt (US-PS 3 996 910) in einer Mengensteuervorrichtung für eine Benzineinspritzanlage einen Steuerschieber in Abhängigkeit der Verbrennungsluftmengen axial in einem mit motordrehzahlsynchroner drehzahlrotierenden Drehschieber für die Kraftstoffmengenzumessung zu verschieben, wobei jedoch im Unterschied zur Erfindung die durch den Steuerschieber zugemessenen Kraftstoffmengen durch den Drehschieber jeweils den zugeordneten Einspritzdüsen zugeteilt werden. Durch das Rotieren wird nur eine Aufteilung, aber keine Volumensteuerung vorgenommen, während der Steuerschieber lediglich eine mengenbestimmende Querschnittssteuerung durchführt. Es ist weder ein Abkoppeln des Druckes von Zugang und Abgang möglich, noch wirken sich beim Mediumtransport Zentrifugalkräfte aus.

Nach einer weiteren Ausgestaltung der Erfindung sind, um die am Steuerschieber angreifenden Radial- oder Axialkräfte zu kompensieren, je zwei Zugänge bzw. Abgänge aufeinander gegenüberliegenden Seiten des Steuerschiebers angeordnet. Diese einander zugeordneten Kanäle sind vorzugsweise miteinander verbunden.

Eine bevorzugte Einbaulage kann bei senkrechter Achsanordnung sein. Hierbei ist die Entlüftung der Anlage «nach oben» aus dem Drehspalt heraus gewährleistet und es kann auf einfache Weise über eine Keilnut eine Schmierung von oben in den Arbeitsspalt besonders bei gasförmigen Medien erzielt werden.

Bei der überwiegenden Zahl der Ausführungsmöglichkeiten der Erfindung sind Zugang und Abgang miteinander vertauschbar. Hierdurch entsteht ein grosser Freiheitsgrad bezüglich der Einbaulage des Gehäuses.

So ist es möglich, dass mehrere Steuerkreise einschaltbar sind, wobei auch nacheinander bei zwei Zugängen und Abgängen diese die gleichen Öffnungen steuern oder wobei an einem Steuerschieber nebeneinander mehrere Steuerebenen vorgesehen sind. Derartige mehrere Steuerkreise können wiederum miteinander verknüpft sein, beispielsweise in Art einer Stufenschaltung und besonders dann, wenn unterschiedliche Volumina gesteuert werden soll.

So ist es auch vorteilhaft, die Erfindung bei Einspritzanlagen einzusetzen, um damit eine gezielte Menge der Einspritzmenge abzuleiten, beispielsweise zur Erzielung einer Spritzdauerverlängerung. Nach einer vorteilhaften Ausgestaltung der Erfindung ist die Steuervorrichtung in einer Abzweigleitung der zur Einspritzdüse führenden Druckleitung einer Einspritzanlage angeordnet, stromauf von einem der Steuervorrichtung auf die Abzweigleitung wirkenden Druckventil. Durch den Einsatz des vorgeschalteten Druckventils, beispielsweise eines Druckhalteventils oder Rückschlagventils, wird zur Vermeidung ungewünschter Spritzbeginnänderungen der tatsächliche Einspritzbeginn erzielt, bevor die Steuervorrichtung zur Erzeugung einer Spritzdaueränderung in Wirkung kommt. Wenn die Steuervorrichtung dann in Funktion ist, ersetzt der Einspritzpumpenregler die vom Motor gebrauchte und durch die Steuervorrichtung abgeleitete Menge, wodurch die gesamte Einspritzdauer einer bestimmten Einspritzmenge verlängert wird, mit der Folge eines leiseren Motorlaufes.

Die Einsatzmöglichkeiten der erfindungsgemässen Steuervorrichtung sind ausserordentlich gross. So kann diese Steuervorrichtung ausser als Dosierapparat oder Mengensteuergerät auch als Steuergerät einer Kältemaschine zum Gasentspannen verwendet werden, eine Anwendung, bei der eine offene Verbindung unzulässig ist. Eine andere Anwendungsmögichkeit besteht in dem weiten Bereich der Unterdrucksteuerung.

Zeichnung

Fünf Ausführungsbeispiele des Gegenstandes der Erfindung sind in der Zeichnung dargestellt und im folgenden näher beschrieben. Es zeigen:

Fig. 1 das erste Ausführungsbeispiel in Teillängsschnitt gemäss dem Schnitt 1–1 in Fig. 2,

Fig. 2 einen Schnitt gemäss der Linie 2–2 in Fig. 1,

Fig. 3 das zweite Ausführungsbeispiel im Längsschnitt gemäss der Linie 3–3 in Fig. 4,

Fig. 4 einen Schnitt gemäss der Linie 4–4 in Fig. 3,

Fig. 5 eine Variante des zweiten Ausführungsbeispiels im Längsschnitt gemäss der Linie 5–5 in Fig. 6,

Fig. 6 einen Schnitt gemäss der Linie 6–6 in Fig. 5,

Fig. 7 das dritte Ausführungsbeispiel im Längsschnitt,

Fig. 8 das vierte Ausführungsbeispiel im Längsschnitt,

Fig. 9 eine Schnitt-Ansicht gem. der Linie 9–9 in Fig. 8,

Fig. 10 eine Ansicht gemäss dem Pfeil 10 in Fig. 8 und

Fig. 11–13 ein weiteres praktisches Ausführungsbeispiel.

Beschreibung der Erfindungsbeispiele

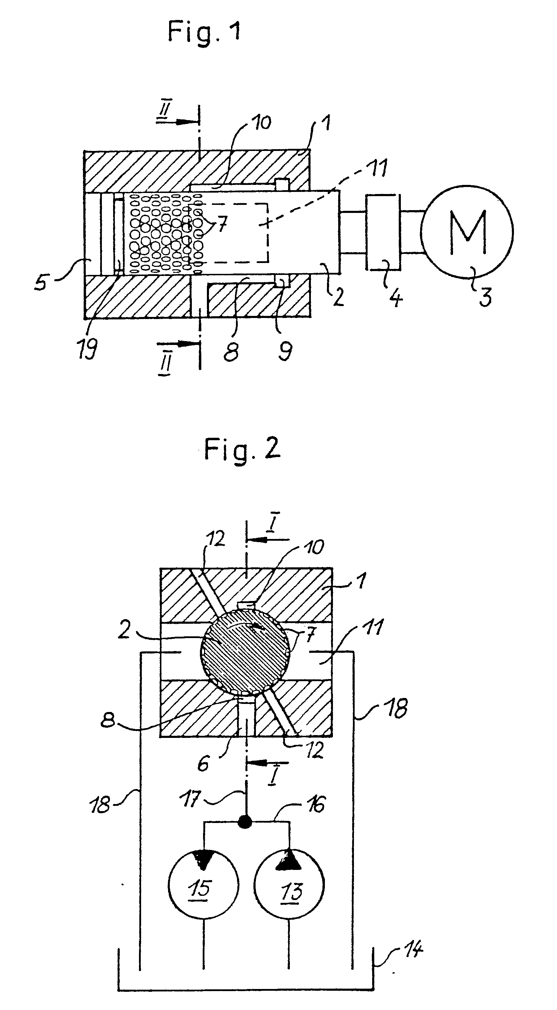

In den Figuren 1 und 2 ist ein erstes Ausführungsbeispiel der Erfindung dargestellt, bei dem in einem Gehäuse 1 ein Steuerschieber 2 drehbar sowie axial verschiebbar gelagert ist. Der Steuerschieber 2 wird durch einen Motor 3 über eine Kupplung 4, die ein axiales Verschieben des Steuerschiebers zulässt, rotierend angetrieben.

Der Steuerschieber 2 arbeitet in einer Bohrung 5 des Gehäuses, in die rechtwinklig ein Zugangkanal 6 mündet. Auf der Mantelfläche des Steuerschiebers 2 sind mindestens gegenüber dieser Mündung muldenförmige Sacköffnungen 7 vorgesehen, die in grosser Zahl in parallelen Reihen angeordnet sind. Hierbei sind die einzelnen Bohrungen pro Reihe gesehen gegeneinander versetzt. Von dem Zugangkanal 6 zweigt eine Längsnut 8 in der Wandung der Bohrung 5 ab, die über eine Ringnut 9 mit einer zweiten Längsnut 10 verbunden ist, die der Längsnut 8 diametral gegenüberliegt. Über diese zweite Längsnut wird ein Ausgleich der radial am Steuerschieber 2 angreifenden hydraulischen Kräfte erzielt.

Als Abgangkanal dienen Ausnehmungen 11 im Gehäuse 1, die ebenfalls diametral einander gegenüberliegen und eine wesentlich grössere Zahl von Öffnungen 7 gleichzeitig überdecken als die Längsnuten 8 und 10. Ausserdem ist im Gehäuse 1 noch ein Zusatzkanal 12 vorgesehen, der entweder zur Vorfüllung der Sackbohrungen oder zu deren Entlüftung dienen kann. Im ersten Fall ist er mit dem Zugangkanal verbunden, im zweiten Fall mit einem Entlastungskanal.

Die Steuervorrichtung ist in diesem ersten Beispiel bei einem hydraulischen Getriebe angewendet dargestellt. Eine Pumpe 13 saugt aus einem Behälter 14 die Hydraulikflüssigkeit ab und pumpt sie zu einem Hydraulikmotor 15. Je nachdem wieviel von der Hydraulikflüssigkeit über die Steuervorrichtung abgezweigt wird, lässt sich die Drehzahl des Motors 15 ändern. Von der Verbindungsleitung 16 zwischen Hydraulikpumpe 13 und Motor 15 zweigt die Zugangsleitung 17 zum Gehäuse 1 der Steuervorrichtung ab. In den Längsnuten 8 und 10 der Steuervorrichtung herrscht demnach der Druck, der auch in der Verbindungsleitung 16 besteht. Über diese beiden Längsnuten 8 und 10 wird der Teil der Öffnungen 7 mit Hydraulikflüssigkeit gefüllt, der diesen Nuten jeweils gerade gegenüberliegt. Beim Weiterdrehen des Steuerschiebers 2 (Pfeilrichtung) gelangen nach einer gewissen Verdrehung diese aufgefüllten Öffnungen in Überdeckung mit den Abgangkanälen 11. Aufgrund der Zentrifugalkraft wird das Medium in diese Abgänge geschleudert, so dass sie sich beim Weiterdrehen, sobald sie gegenüber den Nuten 8 und 10 liegen, wieder auffüllen können. Durch die Zusatzkanäle 12 wird, wie weiter oben schon beschrieben, erreicht, dass sich entweder je nach Anschlussart dieser Zusatzkanäle 12 Restmengen aus den Öffnungen 7 entleeren oder eine Vorfüllung derselben erfolgt. In jedem Fall wird von jeder Öffnung 7 eine deren Volumen entsprechende Menge vom Hydraulikaggregat 13, 15, 16 abgezweigt und über die Abgangskanäle 11 sowie Rückläufe 18 dem Behälter 14 zugeführt.

Je nach axialer Lage des Steuerschiebers 2 stehen mehr Reihen der Öffnungen 7 in Überdekkung mit den Längsnuten 8 und 10. Entsprechend der Anzahl der Öffnungen ist auch die abgezweigte Hydraulikmenge unterschiedlich. Auf diese Weise ist sehr einfach eine Änderung des abgezweigten Volumens möglich. Über eine auf dem Schieber 2 angeordnete Ringnut 19 kann bei extremer Verschiebung des Steuerschiebers 2 ein Kurzschluss zwischen den Längsnuten 8 und 10 sowie den Abgangkanälen 11 erreicht werden, d.h. dass trotz Rotieren des Schiebers 2 die gesamte Fördermenge der Pumpe 13 ungenutzt abströmen kann. In der anderen Extremlage des Steuerschiebers 2 stehen dann keine Öffnungen mehr in Überdeckung mit den Längsnuten 8 und 10, so dass die gesamte von der Pumpe geförderte Menge zum Motor 15 gelangt, d.h. dass dieser mit maximaler Drehzahl läuft.

Bei den nun folgend beschriebenen weiteren Ausführungsbeispielen sind die dem ersten Ausführungsbeispiel entsprechenden Teile mit der gleichen Bezugszahl versehen, die zum Unterschied lediglich einen Index aufweist.

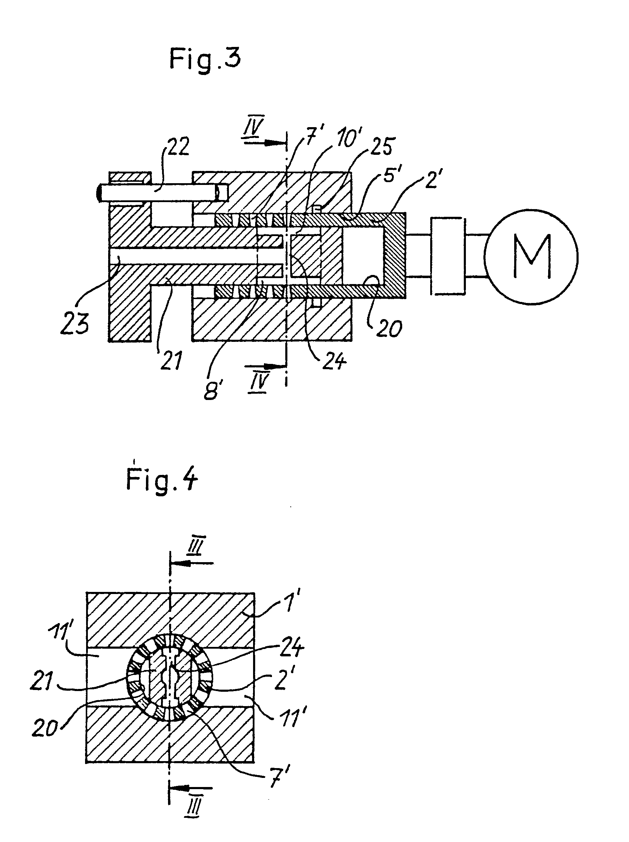

Bei dem in den Figuren 3 bis 6 in zwei Varianten dargestellten zweiten Ausführungsbeispiel ist der Steuerschieber 2′ als Hohlschieber ausgebildet, der in seiner Innenbohrung 20 einen drehfesten Kern 21 aufnimmt. Dieser Kern 21 ist axial verschiebbar und über einen Stift 22 gegen Sich-Mitdrehen gesichert. Der Kern 21 weist für den Zugang des Steuermediums eine Zentralbohrung 23 auf, die über eine Querbohrung 24 mit Längsnuten 8′ und 10′ verbunden ist. Als Öffnungen dienen hier radiale Durchbrüche 7′ in der Wandung des Hohlschiebers 2′. Als Abgangskanäle dienen ähnlich wie beim ersten Ausführungsbeispiel Ausnehmungen 11′, in die aufgrund der Zentrifugalkraft das Steuermedium aus den Öffnungen 7′ geschleudert wird. Die Öffnungen 7′ sind hierfür vorzugsweise leicht konisch nach aussen ausgebildet.

In der den Schieber 2′ aufnehmenden Bohrung 5′ des Gehäuses 1′ ist eine Ringnut 25 vorgesehen, die bei entsprechender axialer Verschiebung des Schiebers 2′ in Überdeckung mit den Öffnungen 7′ gelangt, wodurch über diese ein Kurzschluss entsteht.

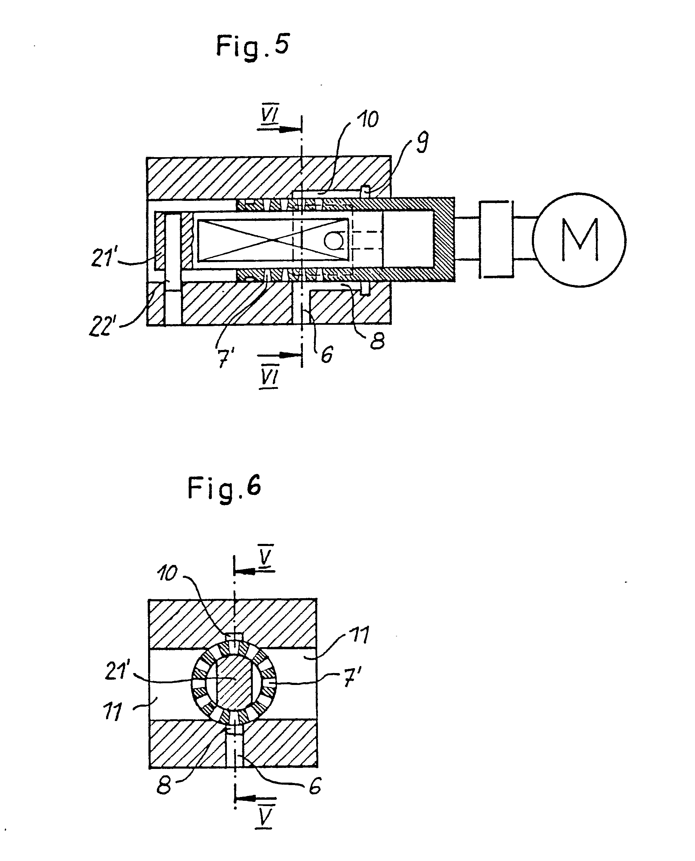

Bei der in den Figuren 5 und 6 dargestellten Variante dieses zweiten Ausführungsbeispiels ist der Kern 21′ über den Stift 22′ zusätzlich auch gegen axiales Verschieben gesichert. Der Zugang des Steuermediums erfolgt hier wie beim ersten Ausführungsbeispiel über eine Radialbohrung 6, Längsnuten 8 und 10 sowie eine Ringnut 9. Der Mediumsabgang erfolgt ebenfalls über die Ausnehmungen 11 im Gehäuse 1, das bis auf die Fassung des Stiftes 22′ wie beim ersten Ausführungsbeispiel ausgebildet ist.

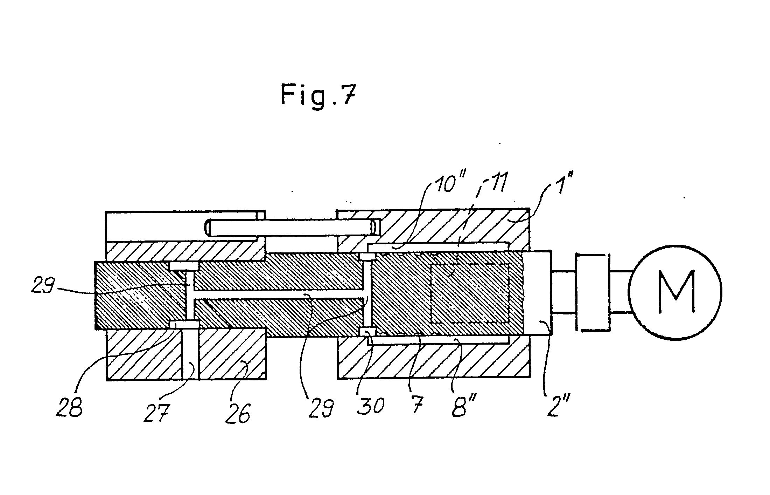

Das in Fig. 7 dargestellte dritte Ausführungsbeispiel ist speziell für die Anwendung bei Einspritzanlagen gestaltet. Durch das Abzweigen einer bestimmten Menge während des Fördervorgangs der Einspritzpumpe, bei der die zeitliche Förderung als solche drehzahlabhängig festgelegt ist, wird eine Spritzdauerverlängerung und damit ein Leiselauf des Motors erreicht. Der im Gehäuse 1″ angeordnete Schieber 2″ ist stufenförmig ausgebildet und nimmt einen Ringschieber 26 auf dem Abschnitt kleineren Durchmessers auf. Der Kraftstoffzugang erfolgt über eine Radialbohrung 27 im Schieber 26, deren Mündung einer Ringnut 28 im Schieber 2″ gegenüberliegt. Über Bohrungen 29 im Schieber 2″ gelangt der Kraftstoff zu einer Ringnut 30 in der Mantelfläche des Abschnitts grösseren Durchmessers. Von dieser Ringnut aus kommt der Kraftstoff dann in die Längsnuten 8″ und 10″, die in Überdeckung mit den Sacköffnungen 7 gelangen kann. Als Abgang dienen wieder die Ausnehmungen 11 wie beim ersten Ausführungsbeispiel. Durch Verändern der Überdeckungslage zwischen Sacköffnungen 7 und Abgangausnehmungen 11 wird die abströmende Menge bestimmt. Diese Überdeckung wird entsprechend den Erfordernissen des Einspritzgesetzes vorgenommen. Statt dem Ringschieber 26 kann das Gehäuse einer Einspritzpumpe gesetzt werden.

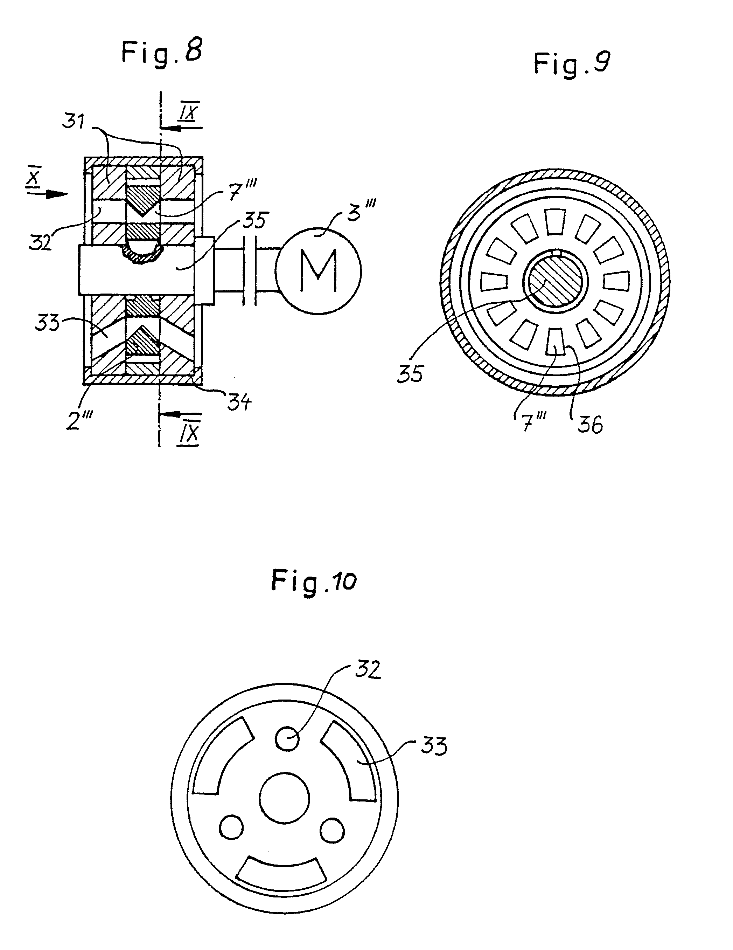

In den Figuren 8, 9 und 10 ist das vierte Ausführungsbeispiel dargestellt, bei dem als Steuerschieber ein Flachschieber 2‴ dient, bei dem die Öffnungen 7‴ zu den Stirnwänden des Steuerschiebers hin offen sind. Der Steuerschieber 2‴ läuft zwischen zwei Gehäuseplatten 31, die auch die Zugangkanäle 32 sowie Abgangkanäle 33 aufnehmen. Der ganze Aufbau ist zum Flachschieber 2‴ hin symmetrisch. Die Platten werden über ein Gehäuse 34 zusammengehalten. Der Antrieb erfolgt über eine Welle 35, die vom Motor 3‴ angetrieben wird.

Die Öffnungen 7‴ durchbrechen den Flachschieber 2‴ und weisen zur Mitte hin eine Verengung auf, derart, dass von aussen in Richtung zur Welle 35 hin eine Einwölbung besteht. Hierdurch wird bewirkt, dass für den Mediumsaustritt aufgrund der Zentrifugalkräfte günstigere Strömungsverhältnisse erreicht werden. Der Öffnungsquerschnitt 36 dieser Öffnungen 7''' ist trapezförmig, sich nach aussen erweiternd (Fig. 9).

Bei diesem Ausführungsbeispiel wird bei einer Umdrehung des Flachschiebers mehrmals ein Zugang bzw. Abgang nacheinander aufgesteuert. Wie aus Fig. 10 ersichtlich, sind dreimal nacheinander Zugänge 32 und Abgänge 33 angeordnet, wobei die Zugänge 32 als Bohrung, hingegen die Abgänge 33 als Ringabschnitte ausgebildet sind.

Wie bei diesem vierten Ausführungsbeispiel können auch bei den anderen Ausführungsbeispielen derartige Nacheinanderschaltungen bei entsprechender Aufteilung vorgenommen werden.

Die axiale Verschiebung des Steuerschiebers kann manuell oder auch automatisch erfolgen. So ist es denkbar, dass eine stirnseitige Steuerfläche des Steuerschiebers durch gesteuertes Medium beaufschlagt wird, wodurch sich die axiale Verschiebung des Steuerschiebers nach Mediumsdruck oder Menge richtet und so eine Art Regelung entsteht. In jedem Fall ist die Erfindung in verschiedensten Varianten gestaltbar, wodurch eine ausserordentlich breite Anwendungsmöglichkeit gegeben ist. Die bevorzugte Anwendung ist naturgemäss bei nahezu inkompressiblen Medien, wie beispielsweise Hydraulikflüssigkeit, Kraftstoff, flüssigen Medikamenten usw. Die Anwendung kann jedoch genauso für Gase erfolgen, indem diese vor dem Zugang zugegeben werden und beim Abgang entspannt wenigstens weitgehend wieder abströmen können. So ist die Anwendung durchaus auch bei Kälte und Klimageräten möglich.

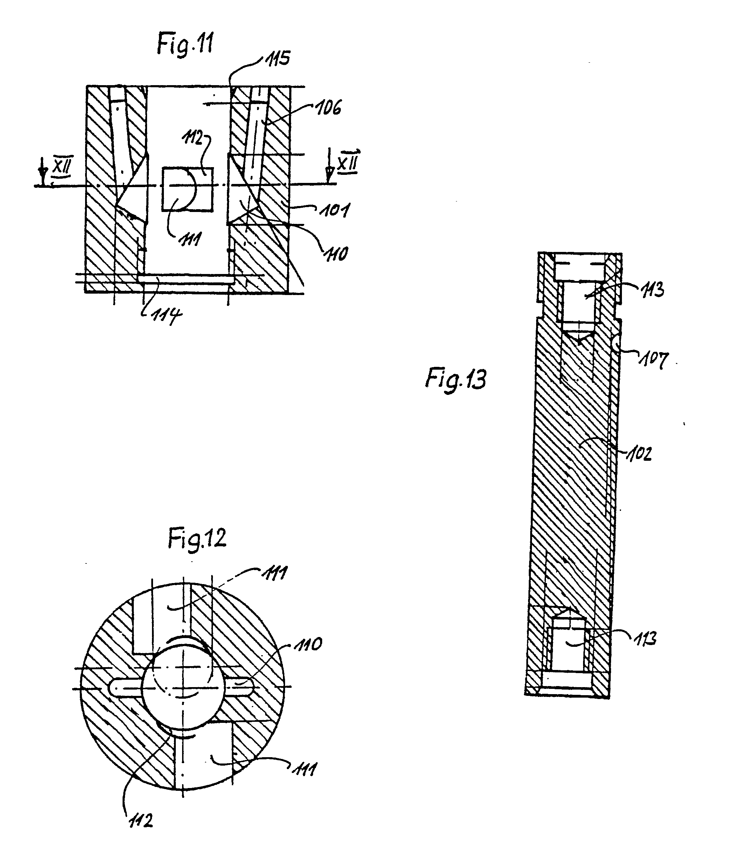

Bei dem in den Fig. 11 bis 13 beschriebenen fünften Ausführungsbeispiel handelt es sich um ein praktisch in der Einspritztechnik einsetzbares Gerät. Bei diesem Beispiel ist in Fig. 11 das Gehäuse im Längsschnitt, in Fig. 12 im Querschnitt gemäss der Linie 12–12 aus Fig. 11 und in Fig. 13 der Drehschieber im Längsschnitt dargestellt. Der Kraftstoff gelangt über Zugangskanäle 106 im Gehäuse 101 zum Drehschieber 102, der hier in ausgebautem Zustand in Fig. 13 dargestellt ist. Über die Längsnut 110, die Teil des Zugangskanals 106 ist, gelangt der Kraftstoff dann in die Öffnungen 107 im Drehschieber 102, die hier nur angedeutet unterschiedlich tief sind, nämlich im oberen Teil des in Fig. 13 dargestellten Drehschiebers 102 tiefer als im unteren Teil, und zwar mit gleichmässigem Übergang. Hierdurch ist je nach axialer Lage des Drehschiebers 102 den Nuten 110 gegenüber eine unterschiedlich tiefe Gruppe von Sacköffnungen 107. D.h. auch die aus den Nuten 110 aufgenommene Kraftstoffmenge ist unterschiedlich gross. Der Abgangkanal 111 ist wie der Zugangskanal symmetrisch zur Achse des gesamten Gerätes angeordnet, um dadurch in radialer Richtung kräfteausgleichend zu wirken. Bevor die Öffnungen 107 durch den Abgangkanal 111 aufgesteuert werden, ist die Steuerstelle bereits «erweitert» um eine flachansteigende Vornut 112, wodurch ausser der Zentrifugalkraft sowie Treibkräften von eingeschlossenen Luftmengen auch die Adhäsionskraft das Herauslösen der in den Öffnungen befindlichen Kraftstoffmengen fördert. Durch das allmähliche Entfernen der Wandung des den Drehschieber 102 umschliessenden Gehäuses reist der Adhäsionsfilm erst allmählich ab und bewirkt vorher eine Sogwirkung.

Am Drehschieber 102 sind an den Enden Gewindebohrungen 113 vorgesehen, um einen Eingriff für die axiale Betätigung desselben zu haben.

Wie in Fig. 11 dargestellt, ist im Gehäuse in der den Drehschieber 102 aufnehmenden Innenbohrung eine Ringnut 114 vorgesehen, um damit dem Ausfliessen des Kaftstoffes Halt zu gebieten. Zudem ist im oberen Bereich des Gehäuses an dieser Innenbohrung eine Phase 117 vorgesehen, die mit dem Drehschieber 102 eine trichterförmige Ringnut bildet und für die Schmierung bei wenig selbstschmierenden Kraftstoffen verwendet werden kann. Zudem kann diese Ringnut 115 zur Entlüftung der sich im Spalt zwischen dem Drehschieber 102 und dem Gehäuse 101 sammelnden Gase dienen.

Beim axialen Verschieben des Drehschiebers 102 stehen den Längsnuten 110 stets Öffnungen 107 gegenüber, so dass die Steuermenge einerseits durch die Drehzahl des Drehschiebers 102 und andererseits durch die axiale Lage veränderbar ist. Wenn beispielsweise der Drehschieber 102 unmittelbar mit der Achse einer Einspritzpumpe gekoppelt ist, und damit eine axiale Verschiebung nicht möglich ist, kann auch erfindungsgemäss das Gehäuse 101 zur Mengenänderung verschoben werden. Die für die Steuerung grundsätzliche Grösse würde dann durch die durch die Einspritzpumpe gegebene Drehzahl gegeben sein und die an die Motorkenngrössen anpassbare zusätzliche Steuerung könnte durch axiales Verschieben des Gehäuses 101 erfolgen.

## Patentansprüche

1. Steuervorrichtung für Volumenteile eines flüssigen, emulgierten oder gasförmigen Mediums mit einem Gehäuse (1), das mindestens einen Zugang (6, 8, 10, 32) und mindestens einen Abgang (11, 33) für das Medium aufweist und einem in dem Gehäuse (1) drehbar angeordneten Steuerschieber (2), der durch geeignete Mittel (3) mit vorgegebener Drehzahl rotierend antreibbar ist und der zur Volumensteuerung mindestens eine in der Mantelfläche vorgesehene Öffnung (7) aufweist, die beim Rotieren des Steuerschiebers (2) abwechseld mit dem Zugang (6, 8, 10, 32) beziehungsweise dem Abgang (11, 33) verbunden ist, wobei die Zentrifugalkraft das Medium in den Abgang (11, 33) treibt.

2. Steurvorrichtung nach Anspruch 1, dadurch gekennzeichnet, dass die Öffnung(en) (7) in der Wand des Steuerschiebers (2) angeordnet ist und dass sie als kurze Sackbohrung oder Mulde vorzugsweise unterschiedlicher Tiefe ausgebildet ist.

3. Steuervorrichtung durch Anspruch 1, dadurch gekennzeichnet, dass die Öffnung(en) (7) als eine durch eine Steuerwand gehende Durchbrechung ausgebildet ist.

4. Steuervorrichtung nach Anspruch 3, dadurch gekennzeichnet, dass der Steuerschieber (2') als Hohlschieber ausgebildet ist mit einer Sackbohrung (20) als Hohlraum, in welchem ein drehfester Kern (21, 21') angeordnet ist.

5. Steuervorrichtung nach Anspruch 4, dadurch gekennzeichnet, dass der Kern (21) für eine Regelung axial verschiebbar ist.

6. Steuervorrichtung nach einem der vorhergehenden Ansprüche, dadurch gekennzeichet, dass der Steuerschieber (2) axial verschiebbar ist.

7. Steuervorrichtung nach einem der vorhergehenden Ansprüche, dadurch gekennzeichnet, dass auf dem Steuerschieber ein vorzugsweise verdrehbarer Ringschieber (1'', 26) zur Steuerung verschiebbar angeordnet ist.

8. Steuervorrichtung nach Anspruch 7, dadurch gekennzeichnet, dass das Gehäuse (1'') der Steuervorrichtung als Ringschieber dient und der Steuerschieber (2'') ein Drehglied einer Einspritzpumpe ist.

9. Steuervorrichtung nach einem der vorhergehenden Ansprüche, gekennzeichnet durch die Anordnung in einer Abzweigleitung der zur Einspritzdüse führenden Druckleitung einer Einspritzanlage und einem stromauf der Steuervorrichtung auf die Abzweigleitung wirkenden Druckventil.

10. Steuervorrichtung nach Anspruch 1, dadurch gekennzeichnet, dass der Steuerschieber (2''') als Flachschieber ausgebildet ist, in dessen Stirnwand mindestens eine Öffnung (7''') angeordnet ist (Fig. 8–10).

11. Steuervorrichtung nach Anspruch 10, dadurch gekennzeichnet, dass die Öffnung(en) (7''') des Steuerschiebers in radialer Richtung desselben eine den Austritt des Mediums erleichternde schräg nach aussen verlaufende Innenwand aufweist.

12. Steuervorrichtung nach einem der vorhergehenden Ansprüche, dadurch gekennzeichnet, dass mehrere Öffnungen (7) vorgesehen sind und in mehreren Reihen auf der Steuerfläche des Steuerschiebers (2) nebeneinander angeordnet sind.

13. Steuervorrichtung nach einem der vorhergehenden Ansprüche, dadurch gekennzeichnet, dass je zwei Zugangskanäle (8, 10, 32) bzw. Abgangskanäle (11, 33) zum Steuerschieber (2) hin einander gegenüberliegen, um die am Steuerschieber (2) angreifenden Mediumskräfte zu kompensieren.

14. Steuervorrichtung nach einem der vorhergehenden Ansprüche, dadurch gekennzeichnet, dass die Öffnung(en) (7) vor Aufsteuerung des Zugangs bzw. nach Zusteuerung des Abgangs einen zusätzlichen Kanal (12) zur Versorgung oder Entlüftung aufsteuert.

15. Steuervorrichtung nach einem der vorhergehenden Ansprüche, dadurch gekennzeichnet, dass die Abgangskanäle (111) entgegen der Drehrichtung des Steuerschiebers (102) einen allmählichen Übergang (112) zum Steuerschieber hin aufweisen (Fig. 11 u. 12).

16. Steuervorrichtung nach einem der vorhergehenden Ansprüche, dadurch gekennzeichnet, dass mindestens der Mündungsabschnitt des Zugangskanals schräg zur Antriebsachse und in Drehrichtung weist.

17. Steuervorrichtung nach einem der vorhergehenden Ansprüche, dadurch gekennzeichnet, dass in den Steuerflächen des Steuerschiebers und/oder den diesen einfassenden Teilen mindestens eine Ringnut (19, 25) angeordnet ist, durch die eine zusätzliche Steuermöglichkeit durch Verbindung von Kanälen und/oder Leckageabführung gegeben ist.

**Claims**

1. Device for controlling parts by volume of a liquid, emulsified or gaseous medium, comprising a housing (1) having at least one inlet (6, 8, 10, 32) and one outlet (11, 33) for the medium, and a control slide (2) which can be set to rotate at a predetermined speed by suitable means (3) and which comprises at least one opening (7) for controlling the volume, the said opening (7) being arranged in the jacket surface and being connected during rotation of the slide (2) alternatingly with the inlet (6, 8, 10, 32) and the outlet (11, 33), the medium being driven into the outlet (11, 33) by the resulting centrifugal force.

2. Control device according to claim 1, characterized in that the said bore(s) (7) is provided in the wall of the control slide (2) and takes the form of a short blind bore or cavity, preferably of different depths.

3. Control device according to claim 1, characterized in that the said opening(s) (7) takes the form of an opening extending through a control wall.

4. Control device according to claim 3, characterized in that the control slide (2') is designed as a hollow slide, with a blind bore (20) forming its inner space and accommodating a torsionally fixed core (21, 21').

5. Control device according to claim 4, characterized in that the said core (21) can slide axially for regulating purposes.

6. Control device according to any of the preceding claims, characterized in that the said control slide (2) can slide in the axial direction.

7. Control device according to any of the preceding claims, characterized in that a preferably rotatable annular slide (1'', 26) is arranged for being displaced on the control slide for control purposes.

8. Control device according to claim 7, characterized in that the housing (1'') serves as annular slide of the control device and that the control slide (2'') is a rotary element of an injection pump.

9. Control device according to any of the preceding claims, characterized in that the device is arranged in a branch line of an injection system leading to the injection nozzle, and that a pressure valve acts on the branch line upstream of the control device.

10. Control device according to claim 1, characterized in that the control slide (2''') is designed as a flat slide with at least one opening (7''') provided in its end wall (figs. 8–10).

11. Control device according to claim 10, characterized in that the said opening(s) (7''') of the control slide is provided with a slightly slanting inner wall extending outwardly in the radial direction of the said slide and facilitating the exit of the medium.

12. Control device according to any of the preceding claims, characterized in that several openings (7) are provided and arranged in several rows side by side on the control surface of the control slide (2).

13. Control device according to any of the preceding claims, characterized in that the inlet channels (8, 10, 32) and outlet channels (11, 33) are arranged in pairs opposite each other, relative to the control slide (2), for the purpose of compensating the forces exerted by the medium upon the control slide (2).

14. Control device according to any of the preceding claims, characterized in that prior to opening the inlet or closing the outlet, the said opening(s) (7) opens an additional channel (12) serving for supply or venting purposes.

15. Control device according to any of the preceding claims, characterized in that the outlet channels (111) exhibit a gradual transition (112) to the control slide (102), in a direction opposite to its sense of rotation (figs. 11 and 12).

16. Control device according to any of the preceding claims, characterized in that at least the end portion of the inlet channel is inclined towards the drive axis and points in the sense of rotation.

17. Control device according to any of the preceding claims, characterized in that at least one annular groove (19, 25) is arranged in the control surfaces of the control slide and/or the parts embracing the latter, whereby the discharge of leakage and/or additional control features are rendered possible by the connection of channels.

**Revendications**

1. Dispositif de commande pour parts de volume d'un agent liquide, émulsionné ou gazéiforme, avec un carter (1), équipé d'au moins une entrée (6, 8, 10, 32) et d'au moins une sortie (11, 33) pour l'agent et avec un tiroir de distribution (2) rotatif logé dans le carter, pouvant être entraîné à rotation à une vitesse prédéfinie par des moyens appropriés (3) et comprenant, pour la commande du volume, au moins une ouverture (7) prévue dans la surface de l'enveloppe qui, pendant la rotation du tiroir (2), est reliée alternativement avec l'entrée (6, 8, 10, 32) ou la sortie (11, 33), la force centrifuge poussant l'agent dans la sortie (11, 33).

2. Dispositif de commande selon la revendication 1, caractérisé en ce que la(les ouverture(s) est(sont) logée(s) dans la paroi du tiroir de commande (2) et qu'elle est prévue comme alésage borgne court ou comme excavation de différentes profondeurs de préférence.

3. Dispositif de commande selon la revendication 1, caractérisé en ce que la(les) ouverture(s) est(sont) prévue(s) comme percement à travers une paroi de distribution.

4. Dispositif de commande selon la revendication 3, caractérisé en ce que le tiroir de distribution (2') est prévu comme tiroir creux avec un alésage borgne (20) comme cavité dans laquelle est disposé un noyau (21, 21') résistant à la torsion.

5. Dispositif de commande selon la revendication 4, caractérisé en ce que le noyau (21) est déplaçable axialement pour un réglage.

6. Dispositif de commande selon une des revendications précédentes, caractérisé en ce que le tiroir de distribution (2) est déplaçable axialement.

7. Dispositif de commande, selon une des revendications précédentes, caractérisé en ce qu'un tiroir annulaire (1'', 26) de préférence rotatif est disposé de façon déplaçable pour la commande sur le tiroir de distribution.

8. Dispositif de commande selon la revendication 7, caractérisé en ce que le carter (1'') du dispositif de commande sert de tiroir annulaire et le tiroir de distribution (2'') est un élément rotatif d'une pompe d'injection.

9. Dispositif de commande selon la revendication 7, caractérisé par la disposition dans une conduite de dérivation de la conduite forcée menant à l'injecteur d'une installation d'injection et une soupape de refoulement agissant en amont du dispositif de commande sur la conduite de dérivation.

10. Dispositif de commande selon la revendication 1, caractérisé en ce que le tiroir de distribution (2'') est conçu comme tiroir aplati dans la paroi frontale duquel est disposée au moins une ouverture (7'') (fig. 8–10).

11. Dispositif de commande selon la revendication 10, caractérisé en ce que l'(les) ouverture(s) (7'') du tiroir de distribution présente en direction radiale de ce dernier une paroi intérieure en pente vers l'extérieur facilitant la sortie de l'agent.

12. Dispositif de commande selon une des revendications précédentes, caractérisé en ce que plusieurs ouvertures (7) sont prévues et disposées en plusieurs rangées l'une à côté de l'autre sur la surface de commande du tiroir de distribution (2).

13. Dispositif de commande selon une des revendications, précédentes, caractérisé en ce que toujours deux canaux d'entrée (8, 10, 32) ou canaux de sortie (11, 13) se trouvent les uns en face des autres en direction du tiroir de distribution pour compenser les forces de l'agent agissant sur le tiroir de distribution (2).

14. Dispositif de commande selon une des revendications précédentes, caractérisé en ce que l'(les) ouverture(s) (7) ouvre(nt) un canal supplémentaire (12) pour l'alimentation ou l'aération avant l'ouverture de l'entrée ou après la fermeture de la sortie.

15. Dispositif de commande selon une des revendications précédentes, caractérisé en ce que les canaux de sortie (111) en sens inverse du tiroir de distribution (102) présentent une transition graduelle (112) en direction du tiroir de distribution (fig. 11 et 12).

16. Dispositif de commande selon une des revendications précédentes, caractérisé en ce qu'au moins la section d'embouchure du canal d'entrée est dirigée obliquement vers l'axe d'entraînement et en direction de rotation.

17. Dispositif de commande selon une des revendications précédentes, caractérisé en ce qu'au moins une rainure annulaire (19, 25) est disposée dans les surfaces de commande du tiroir de distribution et/ou les pièces le bordant, laquelle permet une possibilité de commande supplémentaire par liaison de canaux et/ou l'évacuation de fuites.

## Fig. 1

## Fig. 2

# Fig.3

# Fig.4

## Fig.5

## Fig.6

# Fig.7

# Fig.8

# Fig.9

# Fig.10

Fig.11

115

106

112

XII                    XII

101

111                    110

114

Fig.13

113

107

102

113

Fig.12

111

110

111

112